# EUROPÄISCHE PATENTANMELDUNG

(11) **EP 4 839 017 A1**
(43) Veröffentlichungstag der Anmeldung: **11.11.2026**
(21) Anmeldenummer: 26168889.9
(22) Anmeldetag: 30.03.2026
(51) Int. Cl.: H05B 6/12, H02J 50/00, H02J 50/10, H02J 50/80, H02J 50/90

(54) **INDUKTIONSGERÄT, SYSTEM AUS EINEM INDUKTIONSGERÄTS UND EINER ARBEITSPLATTE SOWIE VERFAHREN ZUM BETRIEB EINES SOLCHEN INDUKTIONSGERÄTS**

(30) Priorität: 08.05.2025 DE 102025117790
(71) Anmelder: E.G.O. Elektro-Gerätebau GmbH, 75038 Oberderdingen (DE)
(72) Erfinder: Schönemann, Konrad, 75056 Sulzfeld (DE); Frank, Marcus, 75056 Sulzfeld (DE); Egenter, Christian, 75015 Bretten (DE); Zarcone, Carmelo, 75038 Oberderdingen (DE); Knappe, Gerd, 75015 Bretten (DE)
(74) Vertreter: Patentanwälte Ruff, Wilhelm, Beier, Dauster & Partner mbB

(57) **Zusammenfassung**

Ein Induktionsgerät zum Einbau in eine Arbeitsplatte weist eine Induktionsspule zur induktiven Leistungsübertragung mit einer Leistung bis zu mehr als 1 kW maximaler Dauerleistung zu einem darüber angeordneten elektrischen Verbraucher mit Empfängerspule, ein Leistungsteil samt Umrichter zur Leistungsversorgung der Induktionsspule, eine Induktionsgerätesteuerung, einen Versorgungsanschluss zur Energieversorgung des Induktionsgeräts von außen mit Netzspannung, eine über der Induktionsspule angeordnete Abdeckplatte, die in einen Ausschnitt in einer Arbeitsplatte eingesetzt wird, und eine NFC-Antenne auf. Die Abdeckplatte besteht aus einem Material, das feuerfest ist und thermisch stabil ist bis zu einer Temperatur von mindestens 250°C sowie durchlässig ist für elektromagnetische Felder und kann insbesondere ausgewählt sein aus der Gruppe Keramik; Glas; Glaskeramik; Naturstein; Steinzeug; Kunststein.

## Beschreibung

### Anwendungsgebiet und Stand der Technik

Die Erfindung betrifft ein Induktionsgerät sowie ein System, bei dem ein solches Induktionsgerät in eine Arbeitsplatte eingebaut ist. Ebenso betrifft die Erfindung Verfahren zum Betrieb eines solchen Induktionsgeräts, insbesondere in einem genannten System.

Das Induktionsgerät weist eine Induktionsspule zur induktiven Leistungsübertragung, ein Leistungsteil mit einer Induktionsgerätesteuerung, einen Versorgungsanschluss und eine Abdeckplatte über der Induktionsspule auf. Es soll dazu dienen, eine induktive Leistungsübertragung, auch WPT genannt, zu einem darauf aufgestellten elektrischen Verbraucher wie einer Küchenmaschine odgl. zu bewirken, welche in dem elektrischen Verbraucher Strom bzw. elektrische Energie zu dessen Betrieb bereitstellt, siehe beispielsweise die DE 10 2021 201 220 A1 oder die DE 10 2024 111 402 A1. Eine solche induktive Leistungsübertragung kann vorteilhaft nach dem sogenannten Ki-Standard erfolgen.

### Aufgabe und Lösung

Der Erfindung liegt die Aufgabe zugrunde, ein eingangs genanntes Induktionsgerät, ein genanntes System damit sowie Verfahren zum Betrieb eines solchen Induktionsgeräts in einem solchen System zu schaffen, mit denen Probleme des Standes der Technik vermieden werden können und es insbesondere möglich ist, einen Aufbau des Induktionsgerät praxistauglich und sicher zu gestalten sowie einen Betrieb des Induktionsgeräts zusammen mit einer induktiven Leistungsübertragung zu einem elektrischen Verbraucher einfach zu gestalten.

Gelöst wird diese Aufgabe durch ein eingangs genanntes Induktionsgerät mit den Merkmalen des Anspruchs 1, durch ein System mit den Merkmalen des Anspruchs 8 sowie durch Verfahren mit den Merkmalen der Ansprüche 12 bis 15. Vorteilhafte sowie bevorzugte Ausgestaltungen der Erfindung sind Gegenstand der weiteren Ansprüche und werden im Folgenden näher erläutert. Dabei werden manche der Merkmale nur für das Induktionskochfeld oder nur für das System beschrieben. Sie sollen jedoch unabhängig davon sowohl für das Induktionskochfeld als auch für das System selbstständig und unabhängig voneinander gelten können. Der Wortlaut der Ansprüche wird durch ausdrückliche Bezugnahme zum Inhalt der Beschreibung gemacht.

Das Induktionsgerät weist eine Induktionsspule auf zur induktiven Leistungsübertragung mit einer Leistung bis zu mehr als 1 kW maximaler Dauerleistung auf, insbesondere bis zu mehr als 500 W maximaler Dauerleistung, vorzugsweise mehr als 50 W, zu einem darüber angeordneten elektrischen Verbraucher mit eigener Empfängerspule. Vorteilhaft weist das Induktionsgerät eine einzige Induktionsspule auf, die besonders vorteilhaft in flacher Form und in einer einzigen Ebene spiralig gewickelt ist. Das Induktionsgerät weist des Weiteren ein Leistungsteil samt üblichem Umrichter zur Leistungsversorgung der Induktionsspule auf sowie, einen Versorgungsanschluss zur Energieversorgung des Induktionsgeräts von außen mit Netzspannung, wobei dieser Versorgungsanschluss mit dem Leistungsteil verbunden ist. Es ist auch eine Induktionsgerätesteuerung vorgesehen, die vor allem mit dem Leistungsteil verbunden ist sowie mit weiteren Funktionseinheiten. Das Induktionsgerät weist auch noch eine über der Induktionsspule angeordnete Abdeckplatte auf, die die Induktionsspule überragt, vorteilhaft um mindestens 1 cm bis 10 cm oder 15 cm. Diese Abdeckplatte ist dazu ausgebildet, in einen Ausschnitt in einer Arbeitsplatte eingesetzt zu werden, und vorzugsweise weist sie eine geometrische Grundform wie Kreis, Rechteck oder Quadrat auf. Außerdem weist das Induktionsgerät noch eine NFC-Antenne auf, die vorteilhaft oben an der Induktionsspule oder zwischen Induktionsspule und Abdeckplatte angeordnet ist. Sie dient auf bekannte Art und Weise zur Kommunikation mit dem aufgestellten Verbraucher, insbesondere für die Übertragung einer Leistungsanforderung vom Verbraucher, und ist deswegen auch mit der Induktionsgerätesteuerung verbunden.

Erfindungsgemäß besteht die Abdeckplatte aus einem Material, das feuerfest ist und thermisch stabil ist bis zu einer Temperatur von mindestens 200°C, möglicherweise auch von mindestens 250°C oder 350°C. Es ist auch durchlässig für elektromagnetische Felder, also für die induktive Energieübertragung von der Induktionsspule an den aufgestellten Verbraucher. Die Abdeckplatte bzw. ihr Material kann insbesondere ausgewählt sein aus der Gruppe Keramik; Steinzeug; Glas; Quarzglas; Glaskeramik; Naturstein; Kunststein odgl. Derartige Materialien erfüllen die genannte Forderung der Temperaturbeständigkeit sehr gut und sind zusätzlich auch ausreichend mechanisch stabil zum Aufstellen eines genannten Verbrauchers. Vorteilhaft ist die Abdeckplatte wasserdicht in der Arbeitsplatte angeordnet, um die üblichen Anforderungen in einer Küche zu erfüllen. Durch eine derart robuste und vor allem temperaturbeständige Abdeckplatte über der Induktionsspule kann ein Problem entschärft werden, das auftritt, wenn unbeabsichtigt Metallgegenstände wie beispielsweise Besteck odgl. nahe der Induktionsspule oder über der Induktionsspule und neben einem aufgestellten Verbraucher liegt. Bei der induktiven Leistungsübertragung an den Verbraucher kann ein solcher Metallgegenstand induktiv erhitzt werden, was möglicherweise auf gefährlich hohe Temperaturen erfolgen kann. Teilweise kann bei entsprechenden Induktionsgeräten zur induktiven Leistungsübertragung mittels einer Erkennungsvorrichtung das Vorhandensein eines solchen Metallgegenstands erkannt werden, dann wird die induktive Leistungsübertragung gestoppt. Dies ist aber sehr aufwendig und auch fehleranfällig. Durch die Verwendung einer entsprechend temperaturbeständigen Abdeckplatte kann ein darauf platzierter Metallgegenstand heiß werden, auch wenn dies nicht gewünscht ist, ohne Schaden anzurichten, da er ja nicht auf der Arbeitsplatte liegt. Ist die Abdeckplatte ausreichend groß, so wird die Arbeitsplatte geschützt. Liegt ein solcher Metallgegenstand dagegen nicht auf der temperaturbeständigen Abdeckplatte, sondern auf der möglicherweise temperaturempfindlichen Arbeitsplatte, so sollte aufgrund der Größe der Abdeckplatte der Abstand zur Induktionsspule so groß sein, dass er nicht mehr induktiv erhitzt wird, beispielsweise mindestens 5 cm. Dann ist das Problem auch vermieden.

In Ausgestaltung der Erfindung verläuft die Induktionsspule in einer Fläche parallel zur Abdeckplatte. Auch eine Empfängerspule in dem Verbraucher sollte parallel dazu verlaufen für eine möglichst effiziente Leistungsübertragung. Die Größe der Induktionsspule und der Empfängerspule sollten aufeinander abgestimmt sein, also nicht zu stark voneinander abweichen, vorteilhaft maximal 10% bis 20% im Durchmesser voneinander abweichen.

In Ausgestaltung der Erfindung kann das Induktionsgerät ein Gehäuse aufweisen, in dem die Induktionsspule, das Leistungsteil und die Induktionsgerätesteuerung angeordnet sind sowie der Versorgungsanschluss, vorzugsweise sämtliche Bestandteile des Induktionsgeräts. Das Gehäuse kann an der Unterseite der Abdeckplatte befestigt sein derart, dass die Induktionsspule einen Abstand von maximal 10 mm, insbesondere maximal 4 mm, zur Unterseite der Abdeckplatte aufweist. Es kann direkt angeklebt sein oder an angeklebten Befestigungspunkte befestigt sein, vorteilhaft angeschraubt sein.

In Ausgestaltung der Erfindung kann unterhalb der Induktionsspule Ferritmaterial zur Magnetfeldleitung angeordnet sein, vorteilhaft in bekannter flacher Form. Das Ferritmaterial kann vorzugsweise direkt an einer Unterseite der Induktionsspule angeordnet sein, wie dies an sich bekannt ist. Weitere Bauteile des Induktionsgeräts, insbesondere Leistungsteil, Induktionsgerätesteuerung und Versorgungsanschluss, können unterhalb des Ferritmaterials angeordnet sein.

In Ausgestaltung der Erfindung kann mindestens ein induktiver Sensor bzw. Magnetfeldsensor seitlich neben der Induktionsspule unter der Abdeckplatte und/oder unter der Arbeitsplatte angeordnet sein. Er kann dazu dienen, über mittelbare magnetische Kopplung zur Induktionsspule hin zu erkennen, wenn in ihrer Nähe ein induktiv beheizbarer Metallgegenstand oder ein Empfänger induktiver Energie angeordnet sind, wobei vorzugsweise diese Sensoren bzw. Magnetfeldsensoren auf derselben Leiterplatte wie eine NFC-Antenne zur Kommunikation mit dem Verbraucher angebracht sein können.

In Ausgestaltung der Erfindung kann es eine Anzeigevorrichtung aufweisen mit Leuchtmitteln, insbesondere mit LED, die mit Lichtleitern verbunden sind bzw. jeweils an einem Lichteinlass eines Lichtleiters angeordnet sind. Dieser Lichtleiter oder ein Lichtauslass des Lichtleiters kann entweder am Rand der Abdeckplatte oder an einem lichtdurchlässigen Abschnitt der Abdeckplatte enden bzw. liegen. Ein solcher lichtdurchlässiger Abschnitt der Abdeckplatte kann ein Ausschnitt in der Abdeckplatte sein, der mit temperaturbeständigem und lichtdurchlässigen Material verschlossen ist. Vorteilhaft ist ein Lichtauslass des Lichtleiters in einem Bereich zwischen dem Rand der Arbeitsplatte hin zu einem Rand der Abdeckplatte angeordnet. So müssen weder Arbeitsplatte noch Abdeckplatte zusätzlich bearbeitet werden.

In alternativer Ausgestaltung der Erfindung kann das Induktionsgerät ohne jegliche aktive optische Anzeige ausgebildet sein. Um dennoch zumindest seinen Ort anzuzeigen kann an der Oberseite der Abdeckplatte, insbesondere mittig über der Induktionsspule, eine Positionsanzeige als abziehbarer Aufkleber aufgeklebt sein, wobei ein solcher Aufkleber temperaturbeständig bis 200°C oder bis 150°C sein sollte. Nach Eingewöhnung an die Benutzung des Induktionsgeräts mit aufgestellten Verbrauchern kann eine Bedienperson diesen Aufkleber entfernen für einen besseren optischen Eindruck und weil er möglicherweise nicht besonders kratzbeständig ist. Es kann auch ein Warnhinweis auf der Abdeckplatte vorgesehen sein, insbesondere dauerhaft, beispielsweise geschrieben mit einem Hinweis "hier beim Betrieb keine metallischen Objekte ablegen". Ein Warnhinweis kann auch durch ein entsprechendes Piktogramm sehr einfach und reduziert realisiert werden. Eine optische Anzeige, die zwischen verschiedenen Betriebszuständen des Induktionsgeräts differenzieren kann, kann auch getrennt davon an der Arbeitsplatte oder an einer Frontplatte eines Möbels unter der Arbeitsplatte angeordnet sein.

In Ausgestaltung der Erfindung können Gewichtssensoren vorgesehen sein, um eine Gewichtsbelastung auf der Abdeckplatte oder deren Änderung zu erfassen. Die Gewichtssensoren können vorteilhaft an der Abdeckplatte angeordnet sein, insbesondere unter der Abdeckplatte und außerhalb des vorgenannten Gehäuses. Diese Gewichtssensoren sind bevorzugt mit der Induktionsgerätesteuerung verbunden sind zu ihrer Auswertung. Die Gewichtssensoren können beispielsweise an einem Außenrand der Abdeckplatte angeordnet sein, insbesondere an deren Unterseite bzw. unten an einer Außenkante. Sie können ein längs des Außenrandes verlaufendes elastisches Material aufweisen, das mindestens eine elektrische Eigenschaft aufweist, die sich bei Ausüben einer Kraft auf das Material ändert. Insbesondere kann dieses elastische Material zwischen zwei einander gegenüberliegenden Elektroden angeordnet sein, deren Kapazität zueinander sich ändert, wenn das elastische Material komprimiert wird, was dann als Gewichtsänderung ausgewertet werden kann. Dies ist bekannt aus der DE 10 2021 204 007 A1, auf welche verwiesen wird.

In weiterer Ausgestaltung der Erfindung können diese Gewichtssensoren vorteilhaft nicht parallel zur Unterseite der Abdeckplatte eingebaut sein, sondern schräg eingebaut sein. Dazu kann die Abdeckplatte bzw. ihre Außenkante im Bereich der Gewichtssensoren angeschrägt sein zum schrägen Einbau der Gewichtssensoren, wodurch zusätzlich ein äußeres Halteprofil für die Gewichtssensoren mit dem gleichen Winkel eingebracht wird. Dadurch wird die Scherfläche verkleinert, die zwischen Abdeckplatte und Arbeitsplatte abgedichtet werden muss und die aufgrund der Scherbelastung nicht als Gewichtssensor ausgebildet werden kann. Dies ist bekannt aus der DE 10 2021 204 006 A1, auf welche verwiesen wird.

In Ausgestaltung der Erfindung kann die Induktionsgerätesteuerung eine drahtlose Kommunikationseinrichtung, insbesondere nach Bluetooth-Standard oder per WLAN, aufweisen für eine Verbindung mit einem mobilen Endgerät, um Informationen, Betriebszustände, Programmbefehle oder wie vorgeschrieben erfasste Gewichte an das mobile Endgerät zu übertragen. Eine Bedienperson kann dies dann an dem mobilen Endgerät ablesen und gegebenenfalls auch etwas an dem Betrieb des Induktionsgeräts ändern. Diese drahtlose Kommunikationseinrichtung ist vorteilhaft eine andere als die zur Kommunikation zwischen Induktionsgerät und aufgestelltem Verbraucher, was insbesondere als NFC-Kommunikation ausgebildet ist.

In Ausgestaltung der Erfindung ist vorteilhaft ein Temperatursensor an der Induktionsspule vorgesehen, insbesondere zwischen Induktionsspule und Unterseite der Abdeckplatte, also auf der Induktionsspule. Vorzugsweise liegt der Temperatursensor an der Unterseite der Abdeckplatte an und kann sowohl deren Temperatur als auch eine möglicherweise gefährlich hohe Temperatur an der Induktionsspule selbst erkennen und Sicherheitsmaßnahmen einleiten.

In Ausgestaltung der Erfindung kann oben auf der Induktionsspule ein Bauteilträger bzw. eine Leiterplatte angeordnet sein, vorzugsweise zwischen der Unterseite der Abdeckplatte und der Oberseite der Induktionsspule. Eine solche Leiterplatte kann insbesondere einfach ausgebildet sein und aus FR4, CEM1 oder CEM3 bestehen, also üblichen Leiterplattenmaterialien. Auf einer solchen Leiterplatte kann mindestens ein Bauteil aus der folgenden Gruppe angeordnet sein: vorgenannter Temperatursensor, NFC-Antenne, Magnetfeldsensor, Elektronik für die Auswertung von Gewichtssensoren, optische Anzeigemittel wie LED, akustische Signalgeber, kapazitive Näherungssensoren, kapazitive Berührungssensoren für Bedienelemente. Besonders bevorzugt ist neben einem Temperatursensor eine NFC-Antenne für die Kommunikation mit dem aufgestellten Verbraucher sowie möglicherweise ein kapazitive Näherungssensor vorgesehen.

In weiterer Ausgestaltung der Erfindung kann eine zusätzliche Spannungsversorgungsausgang für weitere Elektrogeräte unter der Arbeitsplatte vorgesehen sein. Dies weist den Vorteil auf, dass ein elektrischer Anschluss für diese weiteren Elektrogeräte vereinfacht ist. Die Induktionsgerätesteuerung ist dann dazu ausgebildet, zu überwachen, dass eine maximale Strombelastung für eine Hausinstallation mit der Netzspannung eingehalten wird, in der Regel also eine Absicherung mit 16 A. Dabei ist die Induktionsgerätesteuerung vorteilhaft dazu ausgebildet, entweder eine Leistungsversorgung für diese weiteren Elektrogeräte zu reduzieren oder die Leistung an der Induktionsspule für den darüber aufgestellten elektrischen Verbraucher zu reduzieren, jeweils zum Einhalten der maximalen Strombelastung.

In möglicher weiterer Ausgestaltung der Erfindung kann das Induktionsgerät noch eine zusätzliche Qi-Ladestelle für Kleingeräte aufweisen, vorzugsweise für mobile Endgeräte wie Mobiltelefone. Diese können an einer bestimmten Stelle auf die Abdeckplatte aufgelegt werden, beispielsweise vorne links oder vorne rechts, und entsprechend mit induktiver Leistung versorgt werden entsprechend dem Qi-Standard.

Ein erfindungsgemäßes System zeichnet sich durch ein zuvor beschriebenes Induktionsgerät in einer Arbeitsplatte aus, wobei das Induktionsgerät in einem Ausschnitt an der Arbeitsplatte angeordnet ist. Das Induktionsgerät ist in dem Ausschnitt angeordnet, insbesondere mit der Induktionsspule und einem vorgenannten Gehäuse, wobei seine Abdeckplatte den Ausschnitt verschließt und dazu die Abdeckplatte und der Ausschnitt kongruente Form aufweisen. Ein Spalt dazwischen sollte zwischen 0,5 mm bis 20 mm betragen und vorteilhaft nicht größer sein. Wenn in der Arbeitsplatte ein Kochfeld oder eine sonstige dem Kochen dienende Einrichtung angeordnet ist, so sollte ein gewisser Abstand dazwischen gegeben sein, vorteilhaft mindestens 10 cm. Beide Geräte sollten unabhängig voneinander arbeiten können und auch unabhängig voneinander elektrische Anschlüsse bzw. Netzanschlusskabel aufweisen.

In Ausgestaltung der Erfindung kann die Arbeitsplatte eine Oberfläche aufweisen, deren Optik an die Optik der Oberseite der Abdeckplatte angepasst ist. Alternativ kann eine Optik der Abdeckplatte an die Optik der Oberseite der Arbeitsplatte angepasst sein, wobei vorzugsweise die Oberseite der Arbeitsplatte zur Anpassung behandelt ist nach Vorgabe entsprechend der Oberseite der Abdeckplatte. So kann eine entweder möglichst unauffällige oder möglichst optisch passende Integration des Induktionsgeräts in die Arbeitsplatte erreicht werden.

In Ausgestaltung der Erfindung ist vorteilhaft genau eine einzige Induktionsspule in bzw. an einem Ausschnitt in der Arbeitsplatte angeordnet, insbesondere auch mit einem einzigen Induktionsgerät bzw. als einzige Induktionsspule des Induktionsgeräts. In der Arbeitsplatte kann aber, vorteilhaft mit vorgenanntem Abstand, mindestens eine weitere Induktionsspule zur induktiven Leistungsübertragung zu einem darüber angeordneten elektrischen Verbraucher und/oder eine Induktionsheizeinrichtung, insbesondere als Induktionskochfeld, zum induktiven Beheizen eines aufgestellten induktiv beheizbaren Gargefäßes an einem anderen weiteren Ausschnitt der Arbeitsplatte angeordnet sein. So wird eine praxistaugliche Ausgestaltung eines erfindungsgemäßen Systems in einer Küche erreicht.

In Ausgestaltung der Erfindung ist nahe der Induktionsspule oder nahe dem Rand der Abdeckplatte, vorzugsweise mit einem Abstand von weniger als 10 cm, eine optische Anzeigeeinrichtung an oder in der Arbeitsplatte vorgesehen. Diese optische Anzeigeeinrichtung kann vorteilhaft von dem Induktionsgerät bzw. der Induktionsgerätesteuerung ansteuert werden, insbesondere auch elektrisch damit verbunden sein. Eine solche optische Anzeigeeinrichtung kann an einem eigenen Ausschnitt in der Arbeitsplatte angeordnet sein, wobei insbesondere der Ausschnitt mit einer lichtdurchlässigen Abdeckung aus Glas, Quarzglas oder Glaskeramik verschlossen sein sollte, also mechanisch robust und mit einer bestimmten Temperaturbeständigkeit.

In weiterer Ausgestaltung der Erfindung können eine Bedieneinrichtung bzw. Bedienelemente für das Induktionsgerät nahe der Induktionsspule an der Arbeitsplatte angeordnet sein, vorzugsweise weisen sie einen Abstand von weniger als 10 cm oder einen Abstand von weniger als 5 cm dazu auf. Solche Bedienelemente können an der Unterseite der Arbeitsplatte angeordnet sein und berührungslos arbeiten, insbesondere kapazitiv. Für ihre Anbringung kann die Arbeitsplatte auch dünner ausgeführt sein oder von unten eine Ausreise odgl. aufweisen.

In vorteilhafter Ausgestaltung der Erfindung ist eine Oberseite der Abdeckplatte oberflächenbündig mit der Oberseite der Arbeitsplatte. Dies ergibt eine ansprechende Optik und ermöglicht auch ein seitliches Verschieben von Gegenständen auf den Oberseiten bzw. über diese hinweg.

In weiterer Ausgestaltung der Erfindung kann zwischen der Abdeckplatte und der Arbeitsplatte zumindest teilweise lichtdurchlässiges Material angeordnet sein, beispielsweise als Dichtung oder als Teil einer Dichtung, und als Lichtleiter dienen. Dies kann insbesondere in Form von Kunststoff oder lichtdurchlässigem oder transparentem Silikon sein, welches dann temperaturbeständig sein kann. Dazu können unter der Abdeckplatte Lichtquellen wie LED odgl. vor einem Lichteinlass hin zu der lichtdurchlässigen Dichtung angeordnet sein. Am anderen Ende, vorteilhaft senkrecht aus der Dichtung heraus, kann dann Licht heraus leuchten. In Ausgestaltung der Erfindung können eingebaute Lichtleiter im Auslieferungszustand mit einer Schutzfolie/Schutzstruktur versehen bzw. überzogen sein, die bauseits die Herstellung einer Dichtung zwischen Abdeckplatte und Arbeitsplatte beispielsweise durch Ausspritzen mit Silikon oder Gummi ohne Verschmutzung der Lichtleiter ermöglicht. Danach kann sie von diesen abgezogen werden.

In weiterer Ausgestaltung der Erfindung kann an mehreren Stellen zwischen der Abdeckplatte und der Arbeitsplatte vorgenanntes lichtdurchlässiges Material vorgesehen sein. Bei einer rechteckig ausgebildeten Abdeckplatte kann in den Ecken und/oder an den Mitten der Längsseiten lichtdurchlässiges Material vorgesehen sein. Durch eine Beleuchtung dieser Stelle kann jeweils ein Mittelpunkt und ein vorteilhaft vorgegebener Aufstellungsort für den Verbraucher angezeigt werden.

In möglicher Ausgestaltung der Erfindung kann zwischen der Abdeckplatte und der Arbeitsplatte eine Dichtung oder Füllung angeordnet sein, deren Farbe bzw. optisches Erscheinungsbild an die Farbe bzw. an das optische Erscheinungsbild der Arbeitsplatte oder der Abdeckplatte angepasst ist. So kann nicht nur eine Abstimmung zwischen Abdeckplatte und Arbeitsplatte selbst vorgenommen werden, sondern auch noch hinsichtlich der Dichtung dazwischen.

In alternativer Ausgestaltung der Erfindung kann zwischen der Abdeckplatte und der Arbeitsplatte eine Dichtung oder Füllung angeordnet sein, deren Farbe bzw. optisches Erscheinungsbild sich von der Farbe bzw. dem optischen Erscheinungsbild der Arbeitsplatte oder der Abdeckplatte unterscheidet. Dies ist dann anders als das vorgeschriebene Ausführungsbeispiel. So kann die Dichtung oder Füllung selbst als Markierung des Aufstellorts für den Verbraucher über dem Induktionsgerät genutzt werden, weitere bzw. zusätzliche Markierungen können dann entfallen.

Bei einem ersten möglichen Verfahren zum Betrieb eines Induktionsgeräts in einem vorbeschriebenen System kann das Induktionsgerät zuvor beschriebene Gewichtssensoren aufweisen. Dabei kann der Zustand der Gewichtssensoren von der Induktionsgerätesteuerung überwacht werden. Vorteilhaft kann nach Erkennen einer zusätzlichen Gewichtsbelastung auf der Abdeckplatte mittels der Gewichtssensoren das Induktionsgerät eingeschaltet werden, und dafür kann dann eine Leuchtanzeige aktiviert werden und/oder ein akustisches Signal ausgegeben werden. Dadurch kann ein Aufwand für die Erkennung des aufstellen seines Verbrauchers auf das Induktionsgerät reduziert werden, insbesondere auch der Energieverbrauch gesenkt werden.

Bei einem weiteren möglichen Verfahren zum Betrieb eines Induktionsgeräts in einem vorbeschriebenen System kann das Induktionsgerät zuvor beschriebene Gewichtssensoren aufweisen, deren Zustand der Gewichtssensoren von der Induktionsgerätesteuerung überwacht wird. Dies kann erfolgen, um zu erkennen, ob ein Mittelpunkt einer Gewichtsbelastung auf der Abdeckplatte direkt über der Mitte der Induktionsspule liegt. Für den Fall, dass der Mittelpunkt der Gewichtsbelastung um mehr als 2 cm, insbesondere um mehr als 5 cm, von der Mitte der Induktionsspule seitlich verschoben liegt, kann eine Fehlermeldung ausgegeben werden als optisches bzw. akustisches Signal. Zusätzlich oder alternativ kann vorgesehen sein, dass die Induktionsspule keine induktive Leistung überträgt.

Bei einem weiteren möglichen Verfahren zum Betrieb eines Induktionsgeräts in einem vorbeschriebenen System kann das Induktionsgerät zuvor beschriebene Gewichtssensoren aufweisen, wobei deren Zustand von der Induktionsgerätesteuerung überwacht wird. Eine erfasste Gewichtsbelastung kann an einem externen mobilen Endgerät angezeigt werden, das mittels der zuvor beschriebenen Kommunikationseinrichtung mit der Induktionsgerätesteuerung verbunden ist. So kann ein erfasstes Gewicht beispielsweise sehr genau angegeben werden.

Bei einem weiteren möglichen Verfahren zum Betrieb eines Induktionsgeräts in einem vorbeschriebenen System kann das Induktionsgerät vorgeschriebene Näherungssensoren aufweisen, wobei die Induktionsgerätesteuerung mittels dieser Näherungssensoren eine Annäherung einer Bedienperson an das Induktionsgerät erkennen kann. Bei einer Entfernung von weniger als 100 cm oder weniger als 50 cm kann eine Reaktion bzw. Aktivierung erfolgen, wobei daraufhin die Induktionsgerätesteuerung eine optische Anzeige am Induktionsgerät aktiviert. So kann die sich nähernde Bedienperson auf den Aktivierungszustand und/oder die Position der Induktionsspule unter der Abdeckplatte hingewiesen werden.

Bei einem weiteren möglichen Verfahren zum Betrieb eines Induktionsgeräts in einem vorbeschriebenen System kann mittels der vorgeschriebener NFC-Antennen ermittelt werden, ob ein elektrischer Verbraucher mit Empfängerspule darüber ausreichend genau über der Induktionsspule angeordnet ist, so dass er mit genügend Energie versorgt wird, um zumindest einen Kommunikationsaufbau mit der Induktionsgerätesteuerung zu ermöglichen. In dem Fall, dass der elektrische Verbraucher noch nicht ausreichend genau über der Induktionsspule angeordnet ist bzw. noch keine Kommunikation aufgebaut werden kann, können optische und/oder akustische Signale an eine Bedienperson ausgegeben werden zur Verbesserung des Orts der Anordnung des elektrischen Verbrauchers über der Induktionsspule. Dies ist dann eine Art Positionierungshilfe.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Schrägansicht auf ein erfindungsgemäßes System eines erfindungsgemäßen Induktionsgeräts in einer Arbeitsplatte, wobei das Induktionsgerät neben einem Induktionskochfeld und vollständig getrennt davon angeordnet ist,
- Fig. 2: eine Variante der Darstellung aus Fig. 1 mit zur Verdeutlichung entfernter Kochfeldplatte des Induktionskochfelds und einem elektrischen Verbraucher über dem Induktionsgerät zu seiner Leistungsversorgung,
- Fig. 3: eine Ansicht des Systems aus Fig. 1 von unten, wobei vom Induktionsgerät dessen Gehäuse und separater elektrischer Anschluss dargestellt ist,
- Fig. 4: eine vereinfachte Seitenansicht auf die Anordnung der Fig. 2,
- Fig. 5: eine vereinfachte Schnittdarstellung einer Ausgestaltung der Anordnung des Induktionsgeräts in der Arbeitsplatte mit Dichtung und Lichtleitern,
- Fig. 6: eine Draufsicht auf die Anordnung von Fig. 5.

### Detaillierte Beschreibung der Ausführungsbeispiele

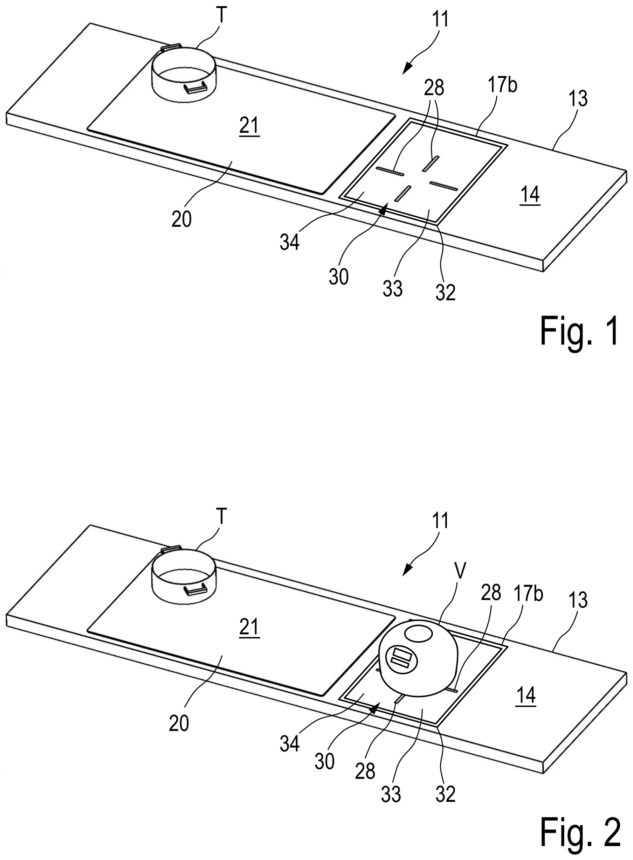

In der Fig. 1 ist ein erfindungsgemäßes System 11 bestehend aus einer Arbeitsplatte 13 und einem Induktionskochfeld 20 in einem Ausschnitt 17a dargestellt. Die Arbeitsplatte 13 weist eine Oberseite 14 auf, und etwas rechts neben dem Induktionskochfeld 20 ist eine Markierung 28 vorgesehen. Die Markierung befindet sich auf einer Abdeckplatte 33 bzw. deren Oberseite 34 des erfindungsgemäßen Induktionsgeräts 30. Hier kann entsprechend der Fig. 2 ein eingangs erläuterter elektrischer Verbraucher V, beispielsweise ein Mixer oder eine Küchenmaschine, aufgestellt werden und wird betrieben bzw. induktiv mit Leistung versorgt. Vorteilhaft kann eine solche induktive Leistungsübertragung nach dem Ki-Standard erfolgen, siehe beispielsweise die DE 10 2021 201 220 A1. Auf einer Kochfeldplatte 21 des Induktionskochfelds 20 ist hinten links ein Topf T aufgestellt zum induktiven Beheizen auf bekannte Art und Weise.

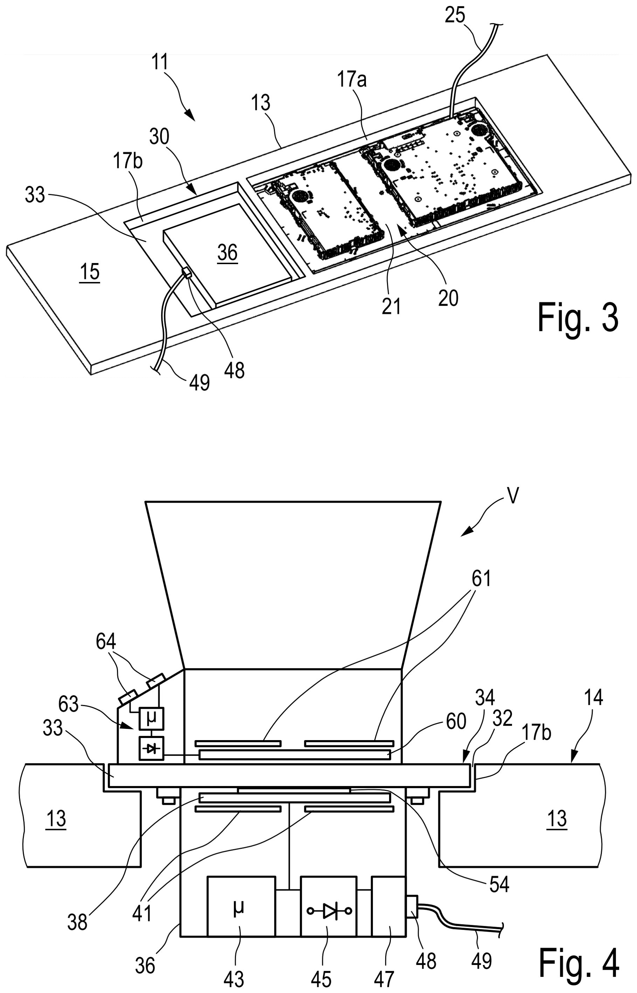

Die Fig. 3 zeigt das erfindungsgemäße System 11 mit der Arbeitsplatte 13 und dem erfindungsgemäßen Induktionskochgerät 20 von unten. Hier sind in der Arbeitsplatte 13 der Ausschnitt 17a für das Induktionskochfeld 20 und der Ausschnitt 17b für das erfindungsgemäße Induktionskochgerät 30 gut zu erkennen. Die Arbeitsplatte 13 kann eine Dicke von 15 mm bis 25 mm bei Stein aufweisen und gut 35 mm oder mehr bei Holz bzw. als Spanplatte odgl..

Es ist zu erkennen, wie in dem recht großen Ausschnitt 17b, der durch die Abdeckplatte 33 verschlossen ist, mit Abstand zu den Rändern des Ausschnitts ein Gehäuse 36 des Induktionskochgeräts 30 vorgesehen ist. Von diesem geht ein Netzanschlusskabel 49 ab zum elektrischen Anschluss. Es ist separat von einem Netzanschlusskabel 25 für das Kochfeld 20, dass rechts in der Fig. 3 dargestellt ist. Der Ausschnitt 17b kann beispielsweise 30 cm x 30 cm groß sein, während das Gehäuse 36 etwa 20 cm x 20 cm groß ist. Eine runde Induktionsspule darin kann einen Durchmesser von 16 cm aufweisen.

In der Fig. 4 ist eine vereinfachte seitliche Schnittansicht der Anordnung des Verbrauchers V auf dem erfindungsgemäßen Induktionsgerät 30 dargestellt. Anhand dessen wird etwas zum inneren Aufbau des Induktionsgeräts 30 und auch des Verbrauchers V ausgeführt.

Das Induktionsgerät 30 weist oben die Abdeckplatte 33 mit einer Oberseite 34 auf. Die Abdeckplatte 33 besteht beispielsweise aus 3 mm bis 6 mm starker Keramik mit einer bestimmten glasierten und somit sehr widerstandsfähigen Oberfläche. Sie kann auch mattiert ausgebildet sein. An Farbe, Gestaltung und gegebenenfalls Musterung/Maserung dieser Abdeckplatte 33 bzw. ihrer Oberseite 34 kann die Gestaltung der Oberseite 14 der Arbeitsplatte 13 angepasst sein, beispielsweise durch Bedrucken, Lackieren, Beschichten oder entsprechende Materialauswahl. So kann entweder möglichst kein sichtbarer Unterschied vorhanden sein, so dass, auch wenn eine Dichtung 32 gemäß Fig. 1 und 2 schmal ausgebildet ist, der Einbau des Induktionsgeräts 30 in die Arbeitsplatte 13 kaum sichtbar ist.

Es kann auch ein zwar erkennbarer, aber in der Gestaltung zusammenpassender optischer Eindruck erzeugt werden, beispielsweise durch abweichende Farbe aber gleiche bzw. entsprechende Musterung. In nochmals weiterer Ausgestaltung kann die Arbeitsplatte 13 aus Edelstahl ausgebildet sein, und durch die Verwendung einer keramischen Abdeckplatte 33 kann somit auch ein solches erfindungsgemäßes Induktionsgerät 30 in eine Arbeitsplatte 13 aus Edelstahl eingebaut sein. Normalerweise wäre dies wegen der Undurchlässigkeit von Edelstahl nicht möglich. Die Oberseite 34 der Abdeckplatte 33 sollte möglichst in einer Fläche mit der Oberseite 14 der Arbeitsplatte 13 liegen, also auch nicht stören beim Verschieben von Töpfen odgl.. Die Abdeckplatte 33 kann allgemein das Gehäuse 36 des Induktionsgeräts 30 und vor allem die Induktionsspule 38 um 3 cm bis 10 cm überragen, also entsprechend größer sein. Dann wird ein ausreichender Abstand für die Arbeitsplatte 13 von der möglicherweise heißen Abdeckplatte 13 bzw. Induktionsspule 38 eingehalten. Damit braucht die Arbeitsplatte 33 bzw. ihre Oberseite 14 nur normale Anforderungen wie in einer Küche üblich zu erfüllen. Des Weiteren kann dadurch auch erreicht werden, dass auf der Abdeckplatte 33 versehentlich abgelegte metallische Gegenstände wie beispielsweise ein Löffel odgl., die bei der induktiven Leistungsübertragung an den Verbraucher V unbeabsichtigt erhitzt werden können und dabei auch sehr heiß werden können, nicht auf der Arbeitsplatte 13 liegen und diese gegebenenfalls beschädigen. Gleichzeitig ist auch sichergestellt, dass ein solcher Löffel, wenn er noch auf der Arbeitsplatte 13 liegt, dann zu weit von der Induktionsspule 38 entfernt ist und nicht mehr erhitzt werden würde. Deswegen kann also die Abdeckplatte 33 ein Stück größer sein als es wegen des Gehäuses 36 oder der Induktionsspule 38 eigentlich nötig wäre.

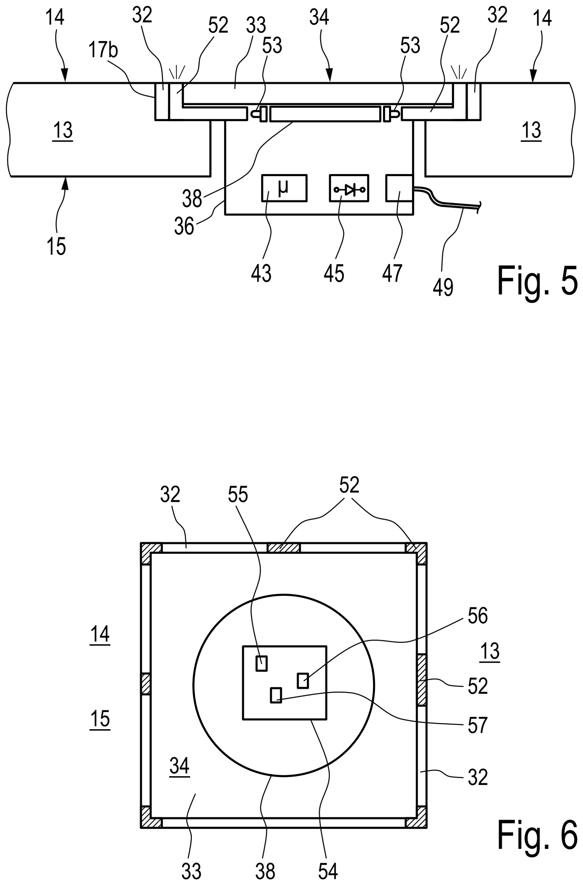

Aus der Fig. 4 ist auch die stufige Ausgestaltung des Ausschnitts 17b zu erkennen, in den die Abdeckplatte 33 genau eingepasst ist. Die Ausgestaltung der Dichtung 32 ist hier nicht näher erläutert, hierzu wird auf die Fig. 5 und 6 verwiesen.

Das Gehäuse 36 ist vorteilhaft an der Unterseite der Abdeckplatte 33 befestigt, beispielsweise können hier Halterungen angeklebt sein, an welche das Gehäuse 36 wiederum angeschraubt werden kann. In dem Gehäuse 36 ist relativ weit oben die Induktionsspule 38 eingebaut, und zwar parallel zur Fläche der Abdeckplatte 33. Auf der Oberseite der Induktionsspule 38 ist vorteilhaft eine Leiterplatte 54 angeordnet, die samt ihrer darauf befindlichen Komponenten möglichst dünn sein sollte. Da beim Betrieb bzw. bei der induktiven Leistungsversorgung des Verbrauchers V keine hohen Temperaturen zu erwarten sind, kann die Leiterplatte 54 aus üblichem Leiterplatten-Substrat bestehen, beispielsweise FR4, CEM1 oder CEM3. Darauf angebrachte Komponenten werden später im Zusammenhang mit der Fig. 6 näher erläutert.

Unterhalb der Induktionsspule 38, vorteilhaft mit geringem Abstand, sind flache Ferrite 41 vorgesehen. Dies ist aus dem Stand der Technik allgemein für Induktionsspulen bekannt, auch für Induktionsheizspulen. Sie schirmen darunterliegende Bauteile des Induktionsgeräts 30 ab.

Unten im Gehäuse 36 ist ganz links eine Induktionsgerätesteuerung 43 dargestellt, vorteilhaft mit einem Mikrocontroller für eine an sich übliche Steuerfunktion für ein solches Induktionsgerät zur induktiven Leistungsübertragung nach dem Ki-Standard. Die Induktionsgerätesteuerung 43 ist mit einem Leistungsteil 45 verbunden bzw. steuert dies an. Dieses weist einen üblichen Umrichter auf und versorgt die Induktionsspule 38 mit Leistung nach Vorgabe der Induktionsgerätesteuerung 43. Diese bezieht diese Vorgabe wie üblich drahtlos vom aufgestellten Verbraucher V.

Das Leistungsteil 45 wiederum ist mit einer Anschlussbuchse 47 verbunden, in welche von außen ein Anschlussstecker 48 eines Netzanschlusskabels 49 eingesteckt ist. Dies kann mittels eines sogenannten Kaltgerätesteckers erfolgen, so dass das Netzanschlusskabel 49 für einen einphasigen Netzanschluss mit einer Absicherung von üblichen 3,7 kW ausgelegt ist. Alternativ kann ein elektrischer Anschluss auch anders erfolgen, beispielsweise mittels einer anzuschraubenden oder anzuklemmenden Leitung, gegebenenfalls auch mit mehr als einer Phase, wie dies für das Induktionskochfeld 20 gemäß Fig. 3 dargestellt und allgemein bekannt ist.

Der Verbraucher V kann hier als Mixer oder als Küchenmaschine ausgebildet sein. Er weist ganz unten eine Empfängerspule 60 mit darüber angeordneten Ferriten 61 auf. Diese Empfängerspule 60 ist aufgrund möglichst geringer Entfernung mit der Induktionsspule 38 induktiv gut gekoppelt für die bekannte induktive Leistungsübertragung nach dem Ki-Standard. Links an dem Verbraucher V ist eine Steuerung 63 mit einem internen Mikrocontroller und einem eigenen Leistungsteil angeordnet. Darüber sind Bedienelemente 64 angeordnet, mit denen eine Bedienperson den Verbraucher V nach Belieben bedienen und ansteuern kann. Nicht dargestellt ist im unteren Bereich des Verbrauchers V eine Einrichtung zur drahtlosen Kommunikation mit dem Induktionsgerät 30, hier vorteilhaft ausgebildet als NFC-Antenne für eine Kommunikation mit einer NFC-Antenne des Induktionsgeräts 30. So kann der Verbraucher V bzw. seine Steuerung 63 auf bekannte Weise Befehle wie beispielsweise für eine Leistungsanforderung an das Induktionsgerät 30 bzw. dessen Induktionsgerätesteuerung 43 geben. Nicht dargestellt, aber leicht vorstellbar sind Funktionseinheiten des Verbrauchers V wie ein Motor für ein Rührwerk odgl. sowie ggf. eine Beheizung. Dies ist aber aus dem Stand der Technik bekannt.

In der Fig. 5 ist in Schnittdarstellung zu erkennen, wie beim Einbau des Induktionsgeräts 30 mit seiner Abdeckplatte 33 in den Ausschnitt 17b der Arbeitsplatte 13 nicht nur eine umlaufende Dichtung 32 vorgesehen ist, um den Einbau wasserdicht zu machen. Des Weiteren sind hier vereinfacht dargestellt Lichtleiter 52 vorgesehen, die in horizontaler Richtung aus dem Gehäuse 36 herauslaufen und dann rechtwinklig nach oben abgewinkelt sind. Sie sind dann oberflächenbündig mit der Oberseite 34 der Abdeckplatte 33, vorteilhaft auch mit der Oberseite 14 der Arbeitsplatte 13. Ein Lichtauslass der Lichtleiter 52 ist somit nach oben gerichtet. Ein innenliegender Lichteinlass ragt jeweils an eine LED 53 zur Einstrahlung des Lichts, wobei die LED 53 von der Induktionsgerätesteuerung 43 angesteuert werden.

Aus der Draufsicht der Fig. 6 ist zu erkennen, dass mögliche Anbringungsorte für derartige Lichtleiter 52 die Eckbereiche sowie die Mittelbereiche der Längsseiten sind. Natürlich sind auch andere Anbringungsorte denkbar und leicht zu realisieren. Die Lichtleiter 52 können auch noch breiter und unter Umständen sogar ganz umlaufend vorgesehen sein. Sie können einerseits aus durchsichtigem Kunststoff hergestellt sein, alternativ aus durchsichtigem Silikon, um eine gewisse Temperaturbeständigkeit zu erreichen. Sie können auch aus Glas ausgebildet sein, beispielsweise zumindest der Bereich am Lichtauslass bzw. an den Oberseiten 34 und 14 von Abdeckplatte 33 und Arbeitsplatte 13 für eine hohe mechanische Robustheit. Der untere Teil mit dem Lichteinlass hin zu den LED 53 kann auch aus Kunststoff gefertigt sein.

Mittels der Lichtleiter 52 bzw. ihrer Lichtauslässe können verschiedene Beleuchtungsszenarien, Aktivierungszustände, Betriebszustände oder Warmanzeigen dargestellt werden. Mit ihnen kann auch ein möglicherweise suboptimales oder zu schlechtes Aufstellen eines Verbrauchers V auf der Abdeckplatte 33 an eine Bedienperson signalisiert werden und gleichzeitig als Aufstellhilfe angezeigt werden, wenn ein ausreichend guter oder optimaler Aufstellort erreicht ist. Wie eingangs erläutert worden ist, können die Markierungen 28 auf der Oberseite 34 der Abdeckplatte 33 auch nicht für einen dauerhaften Gebrauch gedacht sein, sondern nur, um eine Bedienperson am Anfang an die Benutzung des Induktionsgeräts 30 zum Betrieb des Verbrauchers V zu gewöhnen. Danach können sie entfernt werden, beispielsweise wenn es abziehbare Aufkleber sind.

Aus der Draufsicht der Fig. 6 ist auch zu erkennen, wie oben auf der runden Induktionsspule 38 die Leiterplatte 54 angeordnet ist. Auf der Leiterplatte 54 ist der genannte Temperatursensor 55 angeordnet, vorteilhaft mit Richtung nach oben, also hin zur Unterseite der Abdeckplatte 33. So kann eine möglicherweise gefährlich hohe Temperatur erfasst werden und zur Leistungsreduzierung oder zur Abschaltung des Induktionsgeräts 30 dienen. Des Weiteren kann eine NFC-Antenne 56 darauf angeordnet sein für eine Kommunikation mit dem Verbraucher V bzw. dessen NFC-Antenne und Steuerung 63. Diese NFC-Antenne 56 kann beispielsweise als Leiterbahnen auf der Leiterplatte 54 sehr einfach ausgebildet sein.

Des Weiteren ist ein kapazitiver Sensor 57 darauf angeordnet, der beispielsweise das Annähern einer Bedienperson einerseits oder eines Verbrauchers V andererseits erkennen kann. Auch derartige kapazitive Sensoren sind im Stand der Technik bekannt. Die Leiterplatte kann auch versetzt angeordnet sein und die Induktionsspule 38 nur teilweise oder gar nicht überlappen.

In der Fig. 5 nicht dargestellt, aber anhand des genannten Stands der Technik leicht zu realisieren, können zwischen Abdeckplatte 33 bzw. ihrer Unterseite und dem Ausschnitt 17b Gewichtssensoren angeordnet sein. Diese sind eingangs erläutert worden. Sie können verschiedene Funktionen wie ein automatisches Einschalten des Induktionsgeräts 30 bei Erfassen einer Gewichtsbelastung erkennen. Des Weiteren können sie mit dem aufgestellten Verbraucher V zusammenwirken und bestimmte Vorgänge daran über Gewichtsveränderungen steuern helfen. Schließlich können sie auch als autonome Waage verwenden werden. Da das Induktionsgerät 30 selbst keine Benutzerschnittstelle aufweist, kann hierfür eine zusätzliche Kommunikationseinrichtung, beispielsweise per Bluetooth, mit einem externen mobilen Endgerät dazu verwendet werden, Informationen zum Wiegevorgang wie beispielsweise ein aufgestelltes Gewicht an dieses mobile Endgerät zu übertragen. Dort kann es eine Bedienperson dann ablesen.

Auf der Leiterplatte 54 könnten auch die LED 53 aus Fig. 5 angeordnet sein. Aufgrund der möglichst geringen Höhe jedoch sollten diese LED 53 an anderer Stelle und insbesondere unterhalb der Induktionsspule 38 vorgesehen sein.

## Patentansprüche

1. Induktionsgerät mit:
- einer Induktionsspule zur induktiven Leistungsübertragung mit einer Leistung bis zu mehr als 1 kW maximaler Dauerleistung zu einem darüber angeordneten elektrischen Verbraucher mit Empfängerspule,
- einem Leistungsteil samt Umrichter zur Leistungsversorgung der Induktionsspule,
- einer Induktionsgerätesteuerung,
- einem Versorgungsanschluss zur Energieversorgung des Induktionsgeräts von außen mit Netzspannung, wobei der Versorgungsanschluss mit dem Leistungsteil verbunden ist,
- einer über der Induktionsspule angeordneten Abdeckplatte, wobei die Abdeckplatte dazu ausgebildet ist, in einen Ausschnitt in einer Arbeitsplatte eingesetzt zu werden, wobei vorzugsweise die Abdeckplatte eine geometrische Grundform wie Kreis, Rechteck oder Quadrat aufweist,
- einer NFC-Antenne oben an der Induktionsspule oder zwischen Induktionsspule und Abdeckplatte,
**dadurch gekennzeichnet, dass**
- die Abdeckplatte aus einem Material besteht, das feuerfest ist und thermisch stabil ist bis zu einer Temperatur von mindestens 250°C sowie durchlässig ist für elektromagnetische Felder, wobei insbesondere das Material ausgewählt ist aus der Gruppe Keramik; Glas; Glaskeramik; Naturstein; Steinzeug; Kunststein,
- vorzugsweise die Abdeckplatte wasserdicht in der Arbeitsplatte angeordnet ist.

2. Induktionsgerät nach Anspruch 1, **dadurch gekennzeichnet, dass** das Induktionsgerät ein Gehäuse aufweist in dem die Induktionsspule, das Leistungsteil und die Induktionsgerätesteuerung sowie der Versorgungsanschluss angeordnet sind, wobei das Gehäuse an der Unterseite der Abdeckplatte befestigt ist, insbesondere festgeklebt ist derart, dass die Induktionsspule einen Abstand von maximal 10 mm, insbesondere maximal 4 mm, zur Unterseite der Abdeckplatte aufweist.

3. Induktionsgerät nach Anspruch 1 oder 2, **dadurch gekennzeichnet, dass** induktive Sensoren bzw. Magnetfeldsensoren seitlich neben der Induktionsspule unter der Abdeckplatte und/oder unter der Arbeitsplatte angeordnet sind, um über mittelbare magnetische Kopplung zur Induktionsspule hin zu erkennen, wenn in ihrer Nähe ein induktiv beheizbarer Gegenstand oder ein Empfänger induktiver Energie angeordnet ist, wobei vorzugsweise diese Sensoren auf derselben Leiterplatte wie eine NFC-Antenne angebracht sind.

4. Induktionsgerät nach einem der vorhergehenden Ansprüche, **dadurch gekennzeichnet, dass** das Induktionsgerät ohne jegliche aktive optische oder leuchtende Anzeigevorrichtung ausgebildet ist und an der Oberseite der Abdeckplatte, insbesondere mittig über der Induktionsspule, eine Positionsanzeige der Induktionsspule als Aufkleber, insbesondere als abziehbarer Aufkleber, oder als dauerhaft aufgebrachten Warnhinweis aufweist.

5. Induktionsgerät nach einem der vorhergehenden Ansprüche, **dadurch gekennzeichnet, dass** die Induktionsgerätesteuerung eine drahtlose Kommunikationseinrichtung, insbesondere nach Bluetooth-Standard oder per WLAN, aufweist für eine Verbindung mit einem mobilen Endgerät, um Informationen, Betriebszustände oder Programmbefehle an das mobile Endgerät zu übertragen.

6. Induktionsgerät nach einem der vorhergehenden Ansprüche, **dadurch gekennzeichnet, dass** oben auf der Induktionsspule eine Leiterplatte angeordnet ist, vorzugsweise zwischen der Unterseite der Abdeckplatte und der Oberseite der Induktionsspule, insbesondere bestehend aus FR4, CEM1 oder CEM3, wobei auf der Leiterplatte mindestens ein Bauteil aus der folgenden Gruppe angeordnet ist: Temperatursensor, NFC-Antenne, Magnetfeldsensor, Elektronik für die Auswertung von Gewichtssensoren, optische Anzeigemittel, akustische Signalgeber, kapazitive Näherungssensoren, kapazitive Berührungssensoren für Bedienelemente.

7. Induktionsgerät nach einem der vorhergehenden Ansprüche, **dadurch gekennzeichnet, dass** es einen zusätzlichen Spannungsversorgungsausgang für weitere Elektrogeräte unter der Arbeitsplatte aufweist, wobei die Induktionsgerätesteuerung dazu ausgebildet ist, zu überwachen, dass eine maximale Strombelastung für eine Hausinstallation mit der Netzspannung eingehalten wird, wobei die Induktionsgerätesteuerung dazu ausgebildet ist, entweder eine Leistungsversorgung für diese weiteren Elektrogeräte zu reduzieren oder die Leistung an der Induktionsspule für den darüber angeordneten elektrischen Verbraucher zu reduzieren, jeweils zum Einhalten der maximalen Strombelastung.

8. System eines Induktionsgeräts nach einem der vorhergehenden Ansprüche in einer Arbeitsplatte, **dadurch gekennzeichnet, dass** das Induktionsgerät derart an der Arbeitsplatte angeordnet ist, dass in der Arbeitsplatte ein Ausschnitt ist, in dem die Abdeckplatte mit ggf. der Induktionsspule angeordnet ist, wobei der Ausschnitt eine Form aufweist, die kongruent ist zu einer Form der Abdeckplatte, insbesondere um 0,5 mm bis 20 mm größer ist.

9. System nach Anspruch 8, **dadurch gekennzeichnet, dass** die Arbeitsplatte eine Oberfläche aufweist, wobei die Optik der Arbeitsplatte an die Optik der Oberseite der Abdeckplatte angepasst ist oder die Optik der Abdeckplatte an die Optik der Oberseite der Arbeitsplatte angepasst ist, wobei vorzugsweise die Oberseite der Arbeitsplatte zur Anpassung behandelt ist nach Vorgabe entsprechend der Oberseite der Abdeckplatte.

10. System nach Anspruch 8 oder 9, **dadurch gekennzeichnet, dass** genau eine einzige Induktionsspule in bzw. an einem Ausschnitt in der Arbeitsplatte angeordnet ist, wobei vorzugsweise mindestens eine weitere Induktionsspule zur induktiven Leistungsübertragung zu einem darüber angeordneten elektrischen Verbraucher und/oder eine Induktionsheizeinrichtung, insbesondere als Induktionskochfeld, zum induktiven Beheizen eines aufgestellten induktiv beheizbaren Gargefäßes an einem anderen weiteren Ausschnitt der Arbeitsplatte angeordnet ist.

11. System nach einem der Ansprüche 8 bis 10, **dadurch gekennzeichnet, dass** zwischen der Abdeckplatte und der Arbeitsplatte eine Dichtung angeordnet ist, deren Farbe bzw. optisches Erscheinungsbild an die Farbe bzw. an das optische Erscheinungsbild der Arbeitsplatte oder der Abdeckplatte angepasst ist.

12. Verfahren zum Betrieb eines Induktionsgeräts in einem System nach einem der Ansprüche 8 bis 11, **dadurch gekennzeichnet, dass** das Induktionsgerät Gewichtssensoren aufweist, die vorzugsweise an der Abdeckplatte angeordnet sind, insbesondere unter der Abdeckplatte und außerhalb des Gehäuses nach Anspruch 2, wobei die Gewichtssensoren mit der Induktionsgerätesteuerung verbunden sind zur Auswertung, wobei der Zustand der Gewichtssensoren von der Induktionsgerätesteuerung überwacht wird und nach Erkennen einer zusätzlichen Gewichtsbelastung auf der Abdeckplatte mittels der Gewichtssensoren das Induktionsgerät eingeschaltet wird wobei vorzugsweise eine Leuchtanzeige aktiviert wird und/oder ein akustisches Signal ausgegeben wird.

13. Verfahren zum Betrieb eines Induktionsgeräts in einem System nach einem der Ansprüche 8 bis 11, **dadurch gekennzeichnet, dass** das Induktionsgerät Gewichtssensoren aufweist, die vorzugsweise an der Abdeckplatte angeordnet sind, insbesondere unter der Abdeckplatte und außerhalb des Gehäuses nach Anspruch 2, wobei die Gewichtssensoren mit der Induktionsgerätesteuerung verbunden sind zur Auswertung, wobei der Zustand der Gewichtssensoren von der Induktionsgerätesteuerung überwacht wird dahingehend, ob ein Mittelpunkt einer Gewichtsbelastung auf der Abdeckplatte direkt über der Mitte der Induktionsspule liegt, wobei für den Fall, dass der Mittelpunkt der Gewichtsbelastung um mehr als 2 cm, insbesondere um mehr als 5 cm, von der Mitte der Induktionsspule zeitlich verschoben liegt, eine Fehlermeldung ausgegeben wird als optisches bzw. akustisches Signal und/oder die Induktionsspule keine induktive Leistung überträgt.

14. Verfahren zum Betrieb eines Induktionsgeräts in einem System nach einem der Ansprüche 8 bis 11, **dadurch gekennzeichnet, dass** das Induktionsgerät Näherungssensoren nach Anspruch 5 aufweist, wobei die Induktionsgerätesteuerung mittels der Näherungssensoren eine Annäherung einer Bedienperson an das Induktionsgerät erkennt, vorzugsweise bei einer Entfernung von weniger als 100 cm oder weniger als 50 cm, wobei daraufhin die Induktionsgerätesteuerung eine optische Anzeige am Induktionsgerät aktiviert, um die Bedienperson auf den Aktivierungszustand und/oder die Position der Induktionsspule unter der Abdeckplatte hinzuweisen.

15. Verfahren zum Betrieb eines Induktionsgeräts in einem System nach einem der Ansprüche 8 bis 11, **dadurch gekennzeichnet, dass** das Induktionsgerät NFC-Antennen nach Anspruch 5 aufweist, und dass mittels der NFC-Antennen ermittelt wird, ob ein elektrischer Verbraucher mit Empfängerspule darüber ausreichend genau über der Induktionsspule angeordnet ist, dass er mit genügend Energie versorgt wird, um einen Kommunikationsaufbau mit der Induktionsgerätesteuerung zu ermöglichen, wobei in dem Fall, dass der elektrische Verbraucher noch nicht ausreichend genau über der Induktionsspule angeordnet ist, optische und/oder akustische Signale an eine Bedienperson ausgegeben werden zur Verbesserung des Orts der Anordnung des elektrischen Verbrauchers über der Induktionsspule.
